# EUROPEAN PATENT APPLICATION

(11) **EP 4 178 041 A1**
(43) Date of publication of application: **10.05.2023**
(21) Application number: 21206722.7
(22) Date of filing: 05.11.2021
(51) Int. Cl.: H01R 13/436, H01R 13/74, H01R 13/641

(54) **AN ELECTRIC CONNECTOR, AN ASSEMBLY AND A METHOD FOR DETECTING A STATE OF A TERMINAL LOCK**

(71) Applicant: Aptiv Technologies Limited, St. Michael (BB)
(72) Inventor: FARON, Kamil, 31-999 Kraków (PL); GRUDZEWSKI, Michal, 31-460 Kraków (PL)
(74) Representative: Manitz Finsterwald Patent- und Rechtsanwaltspartnerschaft mbB

(57) **Abstract**

An electric connector includes a plurality of cavities, wherein each cavity is designed to receive an electric terminal, a terminal lock mounted on the electric connector and adapted to lock each electric terminal in its cavity, wherein the terminal lock is moveable between an unlocked position and a locked position, and a control element moveable to detect the unlocked position and the locked position of the terminal lock.

## Description

### FIELD

The present disclosure relates to an electric connector, an assembly comprising the electric connector and a bracket, and a method for detecting a state of a terminal lock.

### BACKGROUND

To secure electric terminals in an electric connector, a terminal lock or secondary lock may be provided on the electric connector. Electric connectors adapted to receive electric terminals may be used for example in vehicles, wherein safety aspects and product reliability require that a secondary lock is in a locked position to ensure that the electric terminals are locked in the electric connector.

Accordingly, there is a demand to reliably recognize that a lock which secures electric terminals in an electric connector is in a locked position.

This demand is satisfied by an electric connector, an assembly and a method according to the independent claims.

### SUMMARY

The present disclosure provides an electric connector, an assembly, and a method according to the independent claims. Embodiments are given in the subclaims, the description and the drawings.

In one aspect, the present disclosure may be directed at an electric connector, wherein the electric connector comprises a plurality of cavities, wherein each cavity is designed to receive an electric terminal, a terminal lock mounted on the electric connector and adapted to lock each electric terminal in its cavity, wherein the terminal lock is moveable between an unlocked position and a locked position, and a control element moveable to detect the unlocked position and the locked position of the terminal lock.

The electric connector may be a male or a female connector for coupling a cable. For example, the electric connector may be used in a vehicle like a car or a truck to connect power cables or data cables. The cable may be connected to the electric connector by means of electric terminals. The electric connector comprises a plurality of cavities to receive a plurality of electric terminals.

The terminal lock may be configured to fix or secure each electric terminal in its cavity. For this purpose, the terminal lock may be moved from the unlocked position into the locked position, wherein it is not be possible to remove the electric terminals out of the cavities or to insert the electric terminals into the cavities in the locked position. On the other hand, if the terminal lock is in the unlocked position, it is possible to insert the electric terminals into the cavities or to remove the electric terminals from the cavities of the electric connector.

The control element is adapted to detect an unlocked terminal lock, i.e. by means of the control element it is possible to detect the unlocked position of the electric connector. Thus, error indications or malfunctions may be avoided. Since the control element is part of the electric connector, there is no need of an additional, separate device to detect an unlocked terminal lock.

According to an embodiment, the terminal lock may comprise a recess adapted to partly accommodate the control element when the terminal lock is in the locked position, and a blocking element adapted to block an entry of the control element into the recess when the terminal lock is in the unlocked position.

The terminal lock may comprise several components, wherein each of the components may have different functionalities. The recess of the terminal lock, for example, may enable to detect the locked position of the terminal lock by means of the control element in that the recess partly accommodates the control element when the terminal lock is in the locked position. The recess may be located at a lower edge of the terminal lock, preferably in an area of an outer edge of the terminal lock.

The blocking element may enable to detect the unlocked position of the terminal lock in that the blocking element disables that the control element enters into the recess of the terminal lock when the terminal lock is in the unlocked position. The blocking element may be located next to the recess at a lower edge of the terminal lock. The terminal lock may comprise a plurality of blocking elements and a plurality of recesses, for example two blocking elements and two recesses.

According to an embodiment, the electric connector may comprise at least one spring lever comprising the control element. The electric connector may comprise a plurality of spring levers, for example two spring levers, wherein each spring lever comprises a respective control element. The at least one spring lever may be located at the electric connector such that the spring lever and the control element of each respective spring lever are moved in a direction towards the terminal lock. The at least one spring lever may be moved manually, e.g. a user may press the at least one spring lever in the direction towards the terminal lock, or the at least one spring lever may be moved automatically, e.g. by a robot. Also, the at least one spring lever may be moved by an object, for example if the spring lever is sliding alongside an object, wherein the at least one spring lever contacts the object. The object may be a stationary object, e.g. an edge of a bracket. The different kind of movement possibilities of the at least one spring lever may lead to a plurality of opportunities to detect an unlocked terminal lock and a locked terminal lock, by means of the at least one spring lever, in particular by means of the respective control element of each spring lever.

According to an embodiment, the spring lever may comprise a hook. The hook may be located at one end of the spring lever. The hook may be designed to be partly accommodated in the recess of the terminal lock when the spring lever moves in the direction towards the terminal lock and the terminal lock is in the locked position. Thus, the hook may form the control element as described herein.

According to an embodiment, the terminal lock may be U-shaped and may be adapted to encompass a housing of the plurality of cavities. The terminal lock may be movable transverse to an insertion direction of the electric terminals into the housing of the electric terminals. For example two parallel sides of the U-shaped terminal lock may be adapted to slide alongside the housing of the cavities when the terminal lock is moved from the unlocked position into the locked position, or vice versa. Thus, a catching of the terminal lock may be avoided.

According to an embodiment, the terminal lock may comprise a spring hook adapted to lock the terminal lock in the locked position. The terminal lock may comprise a plurality of spring hooks, for example two spring hooks, wherein each spring hook may be located at an open end of the two parallel sides of the U-shaped terminal lock. The spring hook may comprise a protrusion at one end of the spring hook. To lock the terminal lock in the locked position, the protrusion of the at least one spring hook may engage behind a protrusion of the electric connector. The protrusion of the electric connector may be located at the housing of the cavities.

In another aspect, the present disclosure is directed at an assembly, wherein the assembly comprises an electric connector as described above and a bracket, wherein the bracket comprises a U-shaped opening adapted to receive the electric connector.

The bracket may be any suitable device or an interface that is able to receive the electric connector as described herein. The bracket may be mounted on a vehicle or be part of any component in the vehicle. The bracket may be a steel bracket or a plastic bracket or out of any other suitable material that is able to hold the electric connector. Furthermore, the bracket may be designed as a slide-in bracket instead of a pass-through bracket, i.e. the electric connector may be laterally inserted into the bracket by sliding the electric connector into the U-shaped opening of the bracket, i.e. one side of the bracket is open. On the contrary, a pass-through bracket may not have an open side but a hole inside the pass-through bracket, wherein an electric connector may be inserted into the pass-through bracket by pushing the electric connector through the hole of the pass-through bracket. The advantage of the slide-in assembly as described herein is that compared to a pass-through system, no additional space from below of the bracket is needed for inserting the electric connector into the bracket. Also, less harness and less slack are required by the slide-in assembly compared to a pass-through system.

According to an embodiment, the electric connector of the assembly may further comprise two parallel slots adapted to receive two parallel edges of the opening. The U-shaped opening of the bracket may shape two parallel edges and a third edge perpendicular to each of the two parallel edges. Equivalent to the two parallel edges of the opening of the bracket, the electric connector may comprise two parallel slots, wherein the two parallel edges of the opening of the bracket may fit into the two parallel slots of the electric connector when the electric connector is inserted into the opening of the bracket. Additionally, the electric connector may comprise a third slot that is perpendicular to the two parallel slots, wherein the third edge of the opening of the bracket may fit in the third slot of the electric connector when the electric connector is fully inserted into the opening of the bracket. The slots may be dimensioned that there is a minimum of clearance between the edges and the slots, wherein the minimum of clearance allows to insert the electric connector into the opening of the bracket. Thus, if the electric connector is fully inserted into the opening of the bracket, the electric connector is hold steady by means of the bracket.

According to an embodiment, the control element of the electric connector may be adapted to be moved when the electric connector is laterally inserted into the opening of the bracket. The control element may be moved by means of the edges of the opening of the bracket. The two parallel edges of the U-shaped opening of the bracket may contact the control element if the electric connector is laterally inserted into the opening of the bracket. The two parallel edges of the opening may slide in the two parallel slots of the electric connector until the two parallel edges contact the control element.

According to an embodiment, the control element of the electric connector may be adapted to be moved into a recess of the terminal lock when the electric connector is laterally inserted into the opening of the bracket and when the terminal lock is in the locked position. As described above, the two parallel edges of the U-shaped opening of the bracket may move the control element if the electric connector is laterally inserted into the opening of the bracket. The control element is moved into the recess of the terminal lock when the electric connector is further inserted into the opening of the bracket after the two parallel edges of the opening abut against the control element.

According to an embodiment, the bracket may comprise a notch for locking the electric connector in the opening of the bracket when the electric connector is fully inserted into the bracket. The electric connector may be fully inserted into the bracket if the two parallel slots of the electric connector are inserted completely into the two parallel edges of the opening of the bracket. The notch may be adapted to partly accommodate the control element, in particular the hook of the spring lever, when the electric connector is fully inserted into the bracket. The electric connector may be fully insertable into the bracket only if the terminal lock is in the locked position. If the terminal lock is in the locked position and the electric connector is inserted into the opening of the bracket, the control element moves partly into the recess of the terminal lock which enables to insert the electric connector further into the opening of the bracket. The control element may be biased when the control element is partly accommodated in the recess of the terminal lock. The control element may reach the notch of the bracket when the electric connector is further inserted into the opening of the bracket. The control element may move from the recess of the terminal lock into the notch of the bracket due the bias of the control element. The control element may be removed from the notch of the bracket only if the control element is moved back in the direction of the recess again. Thus, the electric connector is safely fixed in the bracket if the electric connector is fully inserted into the bracket.

According to an embodiment, the assembly may further comprise a blocking element configured to block the control element of the electric connector from entering a recess of the terminal lock when the electric connector is laterally inserted into the opening of the bracket and when the terminal lock is in the unlocked position. As described above, the two parallel edges of the U-shaped opening of the bracket may contact the control element if the electric connector is laterally inserted into the opening of the bracket. The control element is moved into the direction of the terminal lock when the electric connector is further inserted into the opening of the bracket after the two parallel edges of the opening abut against a respective control element. Due to the blocking element, the control element cannot be moved into the recess of the terminal lock. Instead, the control element can only be moved until the control element contacts the blocking element. Thus, the electric connector cannot be fully inserted into the bracket if the terminal lock is in the unlocked position.

According to an embodiment, the control element may prevent to fully insert the electric connector into the opening of the bracket when the electric connector is laterally inserted into the opening of the bracket and when the terminal lock is in the unlocked position.

The electric connector may not be fully insertable into the bracket if the terminal lock is in the unlocked position. If the terminal lock is in the unlocked position and the electric connector is inserted into the opening of the bracket, the control element is blocked by means of the blocking element of the terminal lock from entering the recess of the terminal lock. Thus, the control element stays in its position, i.e. the control element is not moveable into the recess and the electric connector cannot be further inserted into the opening of the bracket, in particular the electric connector cannot be fully inserted into the bracket. The two parallel edges of the U-shaped opening of the bracket may not slide further in the two parallel slots of the electric connector since the two parallel slots are blocked by the control element. An unlocked terminal lock, i.e. the terminal lock is in the unlocked position, may be detected if the electric connector cannot be fully inserted into the opening of the bracket. The detection of an unlocked terminal lock may be tactile without visual control of the terminal lock.

In another aspect, the present disclosure is directed at a method for detecting a state of a terminal lock of an assembly as described above, wherein the method comprises the following steps: inserting the electric connector into the opening of the bracket, and detecting by means of the control element the locked position of the terminal lock when the electric connector is laterally fully inserted into the opening of the bracket, or detecting by means of the control element the unlocked position of the terminal lock when the electric connector is blocked from being laterally fully inserted into the opening of the bracket.

According to an embodiment, the method may further comprise the following steps: moving the terminal lock into the locked position, and fully inserting the electric connector into the opening of the bracket

The detection of an unlocked terminal lock, i.e. the terminal lock is in the unlocked position, or a locked terminal, i.e. the terminal lock is in the locked position, may be done at a vehicle plant.

### DRAWINGS

Exemplary embodiments and functions of the present disclosure are described herein in conjunction with the following drawings, showing schematically:
- Fig. 1A: a perspective view of an assembly with an unlocked terminal lock, comprising an electric connector and a bracket according to an embodiment of the present disclosure;
- Fig. 1B: a cross-sectional top view of the assembly with an unlocked terminal lock;
- Fig. 2A: a perspective view of the assembly not fully inserted into an opening of the bracket with a locked terminal lock;
- Fig. 2B: a cross-sectional top view of the assembly not fully inserted into the opening of the bracket with a locked terminal lock;
- Fig. 3A: a perspective view of the assembly fully inserted into the opening of the bracket with a locked terminal lock;
- Fig. 3B: a cross-sectional top view of the assembly fully inserted into the opening of the bracket with a locked terminal lock; and
- Fig. 4: a flow diagram illustrating a method for detecting the state of the terminal lock of the assembly.

### DETAILED DESCRIPTION

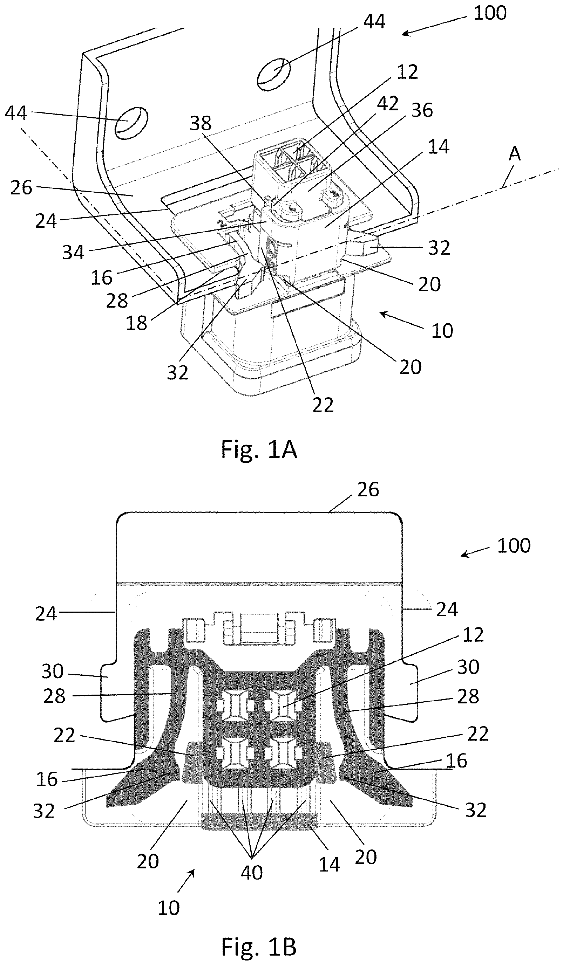

Fig. 1A shows a perspective view of an assembly 100 and Fig. 1B shows a cross-sectional top view of the assembly 100 comprising an electric connector 10 and a bracket 26, according to an embodiment of the present disclosure. The connector 10 comprises a plurality of cavities 12, a terminal lock 14, and a control element 16.

The cavities 12 are located on a top side of the electric connector 10 and the cavities 12 extend from the top side of the electric connector 10 in a direction towards a lower side of the electric connector 10. The cavities 12 are configured to receive electric terminals (not shown). Each cavity 12 may accommodate at least one electric terminal, but it may also possible that a cavity 12 remains empty, i.e. the cavity 12 may not accommodate an electric terminal. Each of the electric terminals is secured in its respective cavity 12 by means of the terminal lock 14.

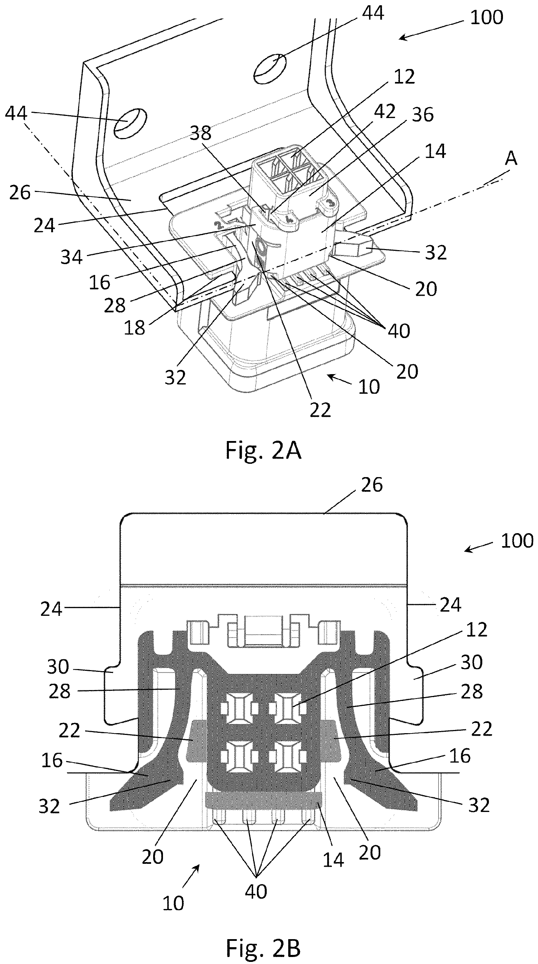

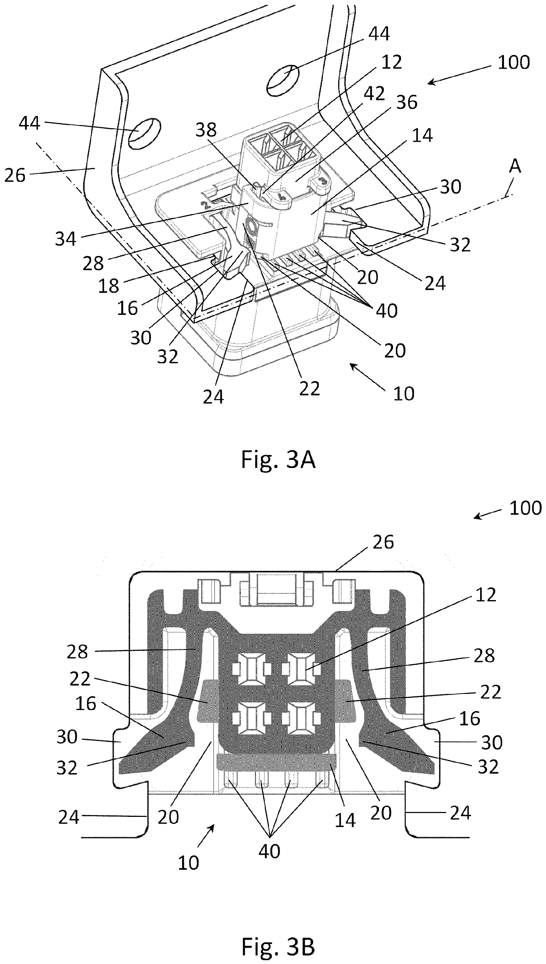

The terminal lock 14 is moveable between an unlocked position (Fig. 1) and a locked position (Figs. 2 and 3), wherein the electric terminals are locked in the cavities 12 when the terminal lock 14 is in the locked position. The electric terminals are not locked in the cavities 12 when the terminal lock 14 is in the unlocked position. The terminal lock 14 is movably mounted on the electric connector 10 and the terminal lock 14 is U-shaped to encompass a housing 36 of the plurality of cavities 12. The terminal lock 14 is hold on the electric connector 10 by means of at least one spring hook 34, preferably by means of two spring hooks 34. Each of the two spring hooks 34 is located at the top of an (parallel) edge formed by the U-shape of the terminal lock 14. In the locked position of the terminal lock 14, the spring hooks 34 hook behind a protrusion 38 of the housing 36 and thereby lock the terminal lock 14 in the locked position. In the unlocked position of the terminal lock 14, the terminal lock 14 is prevented to detach from the electric connector 10 by holding the terminal lock 14 by means of the spring hook 34 at an edge 42 of the housing 36. Furthermore, the terminal lock 14 is located above guide rails 40 that may facilitate the movement of the terminal lock 14 from the unlocked position into the locked position and vice versa.

The terminal lock 14 further comprises a recess 20 adapted to partly accommodate the control element 16 when the terminal lock 14 is in the locked position, and a blocking element 22 adapted to block an entry of the control element 16 into the recess 20 when the terminal lock 14 is in the unlocked position. The terminal lock 14 may comprise a plurality of blocking elements 22 and a plurality of recesses 20, for example two blocking elements 22 and two recesses 20. The two blocking elements 22 and the two recesses 20 may be located at opposite sides of the terminal lock 14 as shown in Fig. 1B. The blocking element 22 moves from a blocking position into a non-blocking position if the terminal lock 14 is moved from the unlocked position into the locked position. Simultaneously, the recess 20 moves in the same direction as the blocking element 22 when the terminal lock 14 is moved from the unlocked position into the locked position. The control element 16 is able to detect the unlocked position and the locked position of the terminal lock 14. If the control element 16 of the electric connector 10 is not movable into the recess 20, i.e. if the control element 16 of the electric connector 10 is blocked by means of the blocking element 22, the unlocked position of the terminal lock 14 is detected as shown in Fig. 1A and Fig. 1 B. If the terminal lock 14 is in the unlocked position the control element 16 is blocked by means of the blocking element 22 of the terminal lock 14. Thus, the blocking element 22 blocks the control element 16 from entering the recess 20 of the terminal lock 14 and the control element 16 is moveable only until the control element 16 contacts the blocking element 22. The control element 16 prevents to fully insert the electric control 10 into the opening of the bracket 26.

Fig. 2A shows a perspective view of the assembly 100 of Fig. 1, and Fig. 2B shows a cross-sectional top view of the assembly 100 not fully inserted into an opening of the bracket 26 with a locked terminal lock 14. The locked position of the terminal lock 14 is detected by means of the control element 16 when the control element 16 of the electric connector 10 is movable into the recess 20 of the terminal lock 14 as shown in Fig. 2A or Fig. 2B. In the locked position of the terminal lock 14, the control element 16 can partly be accommodated in the recess 20. If the control element 16 of the electric connector 10 is movable into the recess 20, i.e. if the control element 16 of the electric connector 10 is not blocked by means of the blocking element 22, the locked position of the terminal lock 14 is detected.

The electric connector 10 further comprises at least one spring lever 28, wherein the at least one spring lever 28 comprises the control element 16. The control element 16 is designed as a hook 32 according to the described embodiment but is not limited to that shape. The spring lever 28 is movable around an attachment point at the electric connector 10 such that the hook 32 is moveable into the recess 20 of the terminal lock 14 when the terminal lock 14 is in the locked position. The electric connector 10 may comprise a plurality of spring levers 28, in particular two spring levers 28. The two spring levers 28 are located on the electric connector 10 at two sides of the terminal lock 14 as shown in Fig. 2B, for example. As described above, the terminal lock 14 of this embodiment comprises two recesses 20 and two blocking elements 22. The two spring levers 28 of this embodiment, in particular each of the respective hooks 32 of the spring levers 28 are blocked by means of the respective blocking element 22 if the terminal lock is in the unlocked position (as shown in Fig. 1B).

The bracket 26 comprises a U-shaped opening adapted to receive the electric connector 10. The bracket 26 may be a steel bracket 26 or a plastic bracket 26, wherein the bracket 26 may be part of any component in a vehicle. The described bracket 26 is a slide-in bracket 26, wherein the bracket 26 comprises a U-shaped opening to laterally insert the electric connector 10 by sliding in the electric connector 10 into the U-shaped opening of the bracket 26. The bracket 26 may comprise mounting holes 44 to attach the bracket 26 to a vehicle. In order to insert the electric connector 10 into the opening of the bracket 26, the electric connector 10 further comprises two parallel slots 18. The two parallel slots 18 receive two parallel edges 24 of the U-shaped opening when the electric connector 10 is inserted into the opening of the bracket 26. The control element 16, in particular the hook 32 of the spring lever 28 is configured to be moved when the electric connector 10 is laterally inserted into the opening of the bracket 26. As can be seen in Figs. 1A to Fig. 2B, the edges 24 contact the control element 16 if the electric connector 10 is inserted into the opening of the bracket 26.

Fig. 3A shows a perspective view of the assembly and Fig. 3B shows a cross-sectional top view of the assembly fully inserted into the opening of the bracket with a locked terminal lock. The control element 16 moves in a direction to the terminal lock 14 if the electric connector 10 is further inserted into the opening of the bracket 26, i.e. the control element 16 is pushed by means of the edges 24. When the terminal lock 14 is in the locked position the control element 16 moves into the recess 20 of the terminal lock 14. The bracket 26 further comprises a notch 30 for locking the electric connector 10 in the opening of the bracket when the electric connector if fully inserted into the bracket 26. The control element 16 reaches the notch of the bracket 26 when the electric connector 10 is further inserted into the opening of the bracket 26. The control element 16 moves from the recess 20 of the terminal lock 14 into the notch 30 of the bracket 26 since the control element 16 is biased. The notch 30 partly accommodates the control element 16, in particular the hook 32 of the spring lever 28, when the electric connector 10 is fully inserted into the bracket 26 and thus, the electric connector 10 is locked in the opening of the bracket 26. The control element 16 is removable from the notch 30 of the bracket 26 only if the control element 16 is moved back in the direction of the recess 20 again.

Summing up, the functionality of the assembly 100 may be described as follows. In an initial state, the electric connector 10 is not inserted into the opening of the bracket 26 and the terminal lock 14 is in the unlocked position. A plurality of electric terminals may be inserted into the cavities 12 of the electric connector 10. The terminal lock 14 may be moved from the unlocked position into the locked position to secure the electric terminals. The electric connector 10 is laterally inserted into the opening of the bracket 26. If the terminal lock 14 has been locked correctly, i.e. the spring hook 34 hooks in the protrusion 38 of the housing 36 and thereby locks the terminal lock 14 in the locked position, the control element 16 is moved partially into the recess 20 of the terminal lock 14 when the terminal lock 14 is in the locked position. Thus, the electric connector 10 can be fully inserted into the opening of the bracket 26. The electric connector 10 is locked in the notch 30 of the bracket 26 when the electric connector 10 is fully inserted into the bracket 26. A fully inserted electric connector 10 signalizes that the terminal lock 14 is in the locked position, thus, a state of the terminal lock 14 in the locked position has been detected. Otherwise, if the terminal lock 14 has not been locked correctly, the control element 16 is blocked by means of the blocking element 22 from entering the recess 20 of the terminal lock 14. The control element 16 prevents to fully insert the electric connector 10 into the opening of the bracket 26. If it is not possible to fully insert the electric connector 10 into the opening of the bracket 26 the terminal lock 14 is in the unlocked position, thus, a state of the terminal lock 14 in the unlocked position has been detected. Moving the terminal lock 14 into the locked position allows to fully insert the electric connector 10 into the opening of the bracket 26. Thus, the problem of detecting a not closed, i.e. an unlocked terminal lock 14 before an electric connector 10 is finally mated on a bracket 26, e.g. a vehicle interface, has been solved.

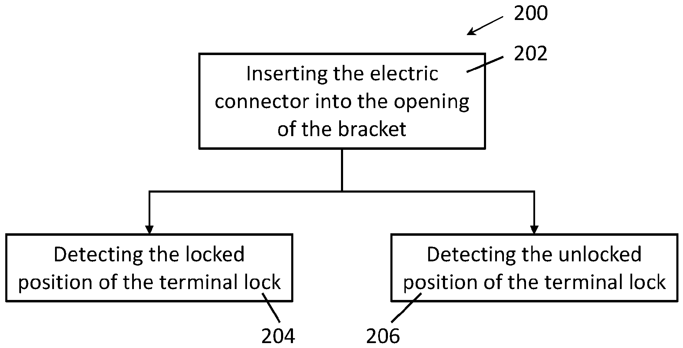

Fig. 4 shows a flow diagram 200 illustrating a method for detecting the state of the terminal lock 14 of the assembly 100. At step 202, the electric connector 10 is inserted into the opening of the bracket 26. When the electric connector 10 is laterally fully inserted into the opening of the bracket 26, the locked position of the terminal lock 14 may be detected at step 204 by means of the control element 16. Otherwise, when the electric connector 10 is blocked from being laterally fully inserted into the opening of the bracket 26, the unlocked position of the terminal lock 14 detected at step 206 by means of the control element 16.

According to an embodiment, the method may further include: moving the terminal lock 14 into the locked position fully inserting the electric connector 10 into the opening of the bracket 26.

### Reference numeral list

- 10: electric connector
- 12: cavity
- 14: terminal lock
- 16: control element
- 18: slot
- 20: recess
- 22: blocking element
- 24: edge
- 26: bracket
- 28: spring lever
- 30: notch
- 32: hook
- 34: spring hook
- 36: housing
- 38: protrusion
- 40: guide rail
- 42: edge
- 44: mounting holes
- 100: assembly
- 200: flow diagram illustrating a method for detecting the state of the terminal lock of the assembly
- 202: step of inserting an electric connector into an opening of a bracket
- 204: step of detecting a locked position of the terminal lock
- 206: step of detecting an unlocked position of the terminal lock
- A: section plane

## Claims

1. An electric connector (10), comprising:
a plurality of cavities (12), wherein each cavity (12) is designed to receive an electric terminal;
a terminal lock (14) mounted on the electric connector (10) and adapted to lock each electric terminal in its cavity (12), wherein the terminal lock (14) is moveable between an unlocked position and a locked position; and
a control element (16) moveable to detect the unlocked position and the locked position of the terminal lock (14).

2. The electric connector (10) according to claim 1,
wherein the terminal lock (14) comprises:
a recess (20) adapted to partly accommodate the control element (16) when the terminal lock (14) is in the locked position; and
a blocking element (22) adapted to block an entry of the control element (16) into the recess (20) when the terminal lock (14) is in the unlocked position.

3. The electric connector (10) according to claim 1 or 2,
wherein the electric connector (16) comprises:
at least one spring lever (32) comprising the control element (16).

4. The electric connector (10) according to claim 3,
wherein the spring lever (32) comprises a hook.

5. The electric connector (10) according to any one of claims 1 to 4,
wherein the terminal lock (14) is U-shaped and adapted to encompass a housing (36) of the plurality of cavities (12).

6. The electric connector (10) according to any one of claims 1 to 5,
wherein the terminal lock (14) comprises a spring hook (34) adapted to lock the terminal lock (14) in the locked position.

7. An assembly (100), comprising:
an electric connector (10) according to any one of claims 1 to 6; and
a bracket (26) comprising a U-shaped opening adapted to receive the electric connector (10).

8. The assembly (100) according to claim 7,
wherein the electric connector (10) further comprises two parallel slots (18) adapted to receive two parallel edges (28) of the opening.

9. The assembly (100) according to claim 7 or 8,
wherein the control element (16) of the electric connector (10) is adapted to be moved when the electric connector (10) is laterally inserted into the opening of the bracket (26).

10. The assembly (100) according to any one of claims 7 to 9,
wherein the control element (16) of the electric connector (10) is adapted to be moved into a recess (20) of the terminal lock (14) when the electric connector (10) is laterally inserted into the opening of the bracket (26) and when the terminal lock (14) is in the locked position.

11. The assembly (100) according to any one of claims 7 to 10,
wherein the bracket (26) comprises a notch (30) for locking the electric connector (10) in the opening of the bracket (26) when the electric connector (10) is fully inserted into the bracket (26).

12. The assembly (100) according to any one of claims 7 to 11,
further comprising a blocking element (22) configured to block the control element (16) of the electric connector (10) from entering a recess (20) of the terminal lock (14) when the electric connector (10) is laterally inserted into the opening of the bracket (26) and when the terminal lock (14) is in the unlocked position.

13. The assembly (100) according to any one of claims 7 to 12,
wherein the control element (16) prevents to fully insert the electric connector (10) into the opening of the bracket (26) when the electric connector (10) is laterally inserted into the opening of the bracket (26) and when the terminal lock (14) is in the unlocked position.

14. A method for detecting a state of a terminal lock (14) of an assembly (100) according to any one of claims 7 to 13, comprising:
inserting the electric connector (10) into the opening of the bracket (26); and
detecting by means of the control element (16) the locked position of the terminal lock (14) when the electric connector (10) is laterally fully inserted into the opening of the bracket (26); or
detecting by means of the control element (16) the unlocked position of the terminal lock (14) when the electric connector (10) is blocked from being laterally fully inserted into the opening of the bracket (26).

15. The method according to claim 14, further comprising:
moving the terminal lock (14) into the locked position; and
fully inserting the electric connector (10) into the opening of the bracket (26).
